**Europäisches Patentamt**

**European Patent Office**

**Office européen des brevets**

(11) Veröffentlichungsnummer: **0 146 196**
A2

# (12) EUROPÄISCHE PATENTANMELDUNG

(21) Anmeldenummer: **84201870.7**

(51) Int. Cl.⁴: **G 02 B 6/12**

(22) Anmeldetag: **14.12.84**

(30) Priorität: **17.12.83 DE 3345715**
**17.12.83 DE 3345716**

(43) Veröffentlichungstag der Anmeldung: **26.06.85**
**Patentblatt 85/26**

(84) Benannte Vertragsstaaten: **DE FR GB IT SE**

(71) Anmelder: **Philips Patentverwaltung GmbH,**
**Bilistrasse 80, D-2000 Hamburg 28 (DE)**

(84) Benannte Vertragsstaaten: **DE**

(71) Anmelder: **N.V. Philips' Gloeilampenfabrieken,**
**Groenewoudseweg 1, NL-5621 BA Eindhoven (NL)**

(84) Benannte Vertragsstaaten: **FR GB IT SE**

(72) Erfinder: **Mannschke, Lothar P., Dipl.-Ing.,**
**Haidbuckel 23, D-8501 Eckental-Eckenhaid (DE)**

(74) Vertreter: **Peuckert, Hermann et al, Philips**
**Patentverwaltung GmbH**
**Bilistrasse 80 Postfach 10 51 49,**
**D-2000 Hamburg 28 (DE)**

(54) **Integriert-optisches Bauelement.**

(57) Mit Lichtleitungen versehene Substrate ergeben übereinander gestapelt einen optischen Multilayer, bei dem die Lichtleitungen verschiedener Ebenen durch äussere optische Elemente miteinander verbunden sind.

Die äusseren optischen Elemente können einseitig verspiegelte, 0,25 pitch Gradienten-Index-Stablinsen oder Lichtwellenleiter sein.

0146196

- 1 -

Philips Patentverwaltung GmbH      PHD 83338 EP
N.V. Philips' Gloeilampenfabrieken   04.12.1984

Integriert-optisches Bauelement

Die Erfindung betrifft ein integriert-optisches Bauelement mit mindestens einem Trägersubstrat für Schicht- oder Streifenwellenleiter, insbesondere für die optische Nachrichtentechnik. Ausgehend von flächig herstellbaren, lichtleitenden Schichten, woraus Schichtwellenleiter gebildet sind, sind ähnlich den Bahnen einer Leiterplatte auch lichtleitende Streifen, also Streifenwellenleiter herstellbar. Daraus werden integriert-optische Schaltnetze gebildet.

Es ist bekannt, spiegelsymmetrisch Streifenwellenleiter in die Oberfläche zweier Substrate einzulassen, die flächig zusammengefügt werden. Die Streifenwellenleiter besitzen an den Verbindungsebenen einen runden Querschnitt (europäisches Patent Nr. 0 052 901), so daß leicht Lichtwellenleiter angeschlossen werden können. Aus derartigen Streifenwellenleitern bestehende Schaltnetze bleiben in einer einzigen Ebene.

Der Erfindung liegt die Aufgabe zugrunde, ein verlustarmes, integriert-optisches Bauelement zu schaffen, mit dem sich eine Vielzahl optischer

- 2 -

- 2 -

Funktionen in gedrängter Bauweise erfüllen läßt.

Diese Aufgabe wird mit einem integriert-optischen Bauelement der eingangs genannten Art dadurch gelöst, daß die Schichtwellenleiter oder die Streifenwellenleiter in verschiedenen Ebenen angeordnet sind, daß die Streifenwellenleiter bis zum Rand des Trägersubstrats heranführen und daß Streifenwellenleiter der einen Ebene und Streifenwellenleiter bzw. Schichtwellenleiter der anderen Ebene durch äußere optische Elemente verbunden sind.

Der Erfindung liegt die Erkenntnis zugrunde, daß integriert-optische Bauelemente mit mehreren Funktionen einen großen Flächenbedarf haben, der sich dadurch vermindern läßt, daß Substrate beidseitig beschichtet und die Schichten optisch miteinander verbunden werden. So können mehrere solcher Substrate übereinander gestapelt und deren Streifenwellenleiter durch z.B. Abbildungssysteme oder Lichtwellenleiter optisch miteinander verbunden werden. Dadurch können Funktionen in verschiedenen, dicht übereinander liegenden Ebenen realisiert werden.

Die Erfindung wird mit weiteren, in den Unteransprüchen angegebenen vorteilhaften Ausgestaltungen anhand der in der Zeichnung schematisch dargestellten Ausführungsbeispiele näher erläutert und beschrieben.

Es zeigen:

Fig. 1   in dreidimensionaler Anschicht ein inte-

- 3 -

griert-optisches Bauelement als Multilayer
mit Gradienten-Index-Linsen als optischen
Verbindern.

Fig. 2 in dreidimensionaler Ansicht einen vergrößerten Ausschnitt der Fig. 1.

Fig. 3 in dreidimensionaler Ansicht ein integriert-optisches Bauelement als Multilayer
mit Lichtwellenleitern als optischen Verbindern.

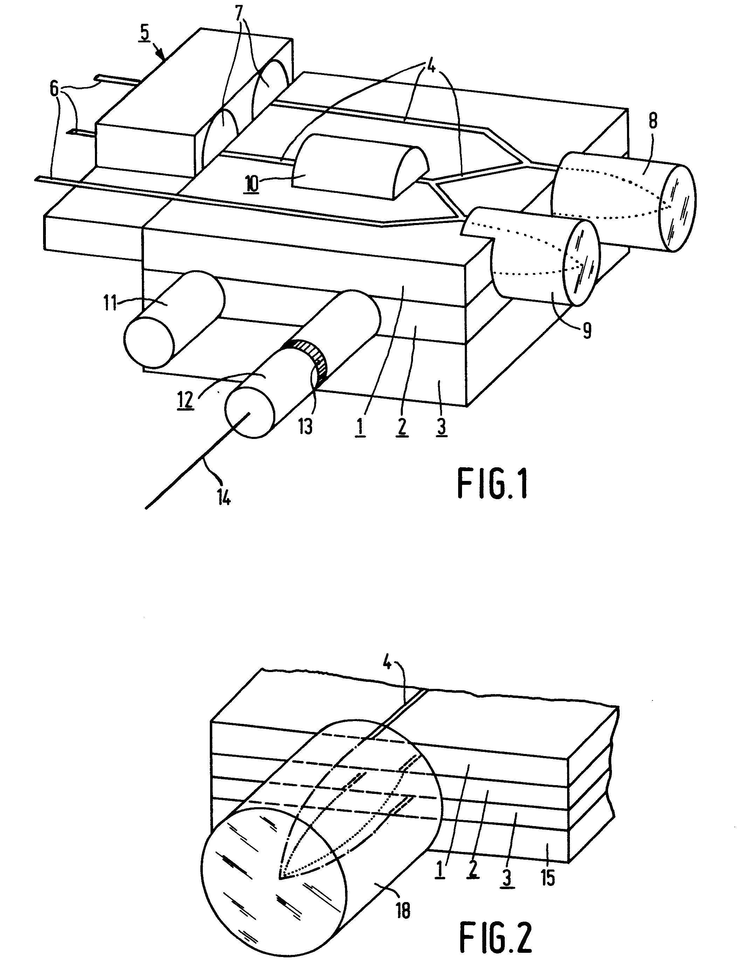

Fig. 1 zeigt einen sogenannten optischen Multilayer, also ein integriert-optisches Bauelement,
das aus für sich gesehen intergriert-optischen
Bauelementen 1, 2 und 3 besteht, die bündig übereinander gelegt sind. Die optischen Bauelemente 1,
2 und 3 sind Substrate, auf deren Oberflächen
Streifenwellenleiter 4 eingelassen sind. Die Form
der Bahnen der Streifenwellenleiter 4 ergibt sich
aus den von ihnen erwarteten optischen Funktionen.

Streifenwellenleiter 4 sind über Randverbinder 5
an Lichtwellenleiter 6 eines optischen Übertragungssystem anschließbar. Als Randverbinder sind
auch Gradienten-Index-Stablinsen 7 mit 0,5 Strahlperiodenlänge (0,5 pitch) geeignet, die den Streifenwellenleiter auf den Lichtwellenleiter abbilden.

Das aus übereinander liegenden Bauelementen bestehende integriert-optische Bauelement hat zwischen
den Streifenwellenleitern 4 der verschiedenen Ebenen optische Verbindungen, die durch Abbildung erzeugt werden. Dazu werden in vorgegebenen Bereichen die Streifenwellenleiter 4 nahezu parallel an den Rand geführt. Auf die herangeführten Enden der Streifenwellenleiter 4 wird eine einseitig verspiegelte Gradienten-Index-Linse 8 und 11 mit jeweils effektiv 0,5 Strahlperiodenlänge (also real 0,25 pitch) gesetzt, von der die Stirnflächen der herangeführten Streifenwellenleiter aufeinander abgebildet werden.

Wird als Verspiegelung eine Interferenzschicht 13 verwendet, die für eine vorgegebene Wellenlänge durchlässig ist, so kann mit einer weiteren, auf die Interferenzschicht 13 aufgesetzten 0,25 pitch Gradienten-Index-Linse 12 ein vorgegebener Lichtanteil in den Lichtwellenleitern 14 ausgekoppelt werden. In der aus zwei 0,25 pitch Gradienten-Index-Linsen bestehenden Anordnung findet eine Abbildung eines Streifenwellenleiters 14 statt. Es ist auch eine Teilverspiegelung (wellenlängenunabhängig) denkbar, die einen Teil des von Streifenwellenleiter zu Streifenwellenleiter übertragenen Lichtes zu Kontrollzwecken ausblendet.

Soll an einer anderen Stelle eine optische Verbindung zwischen Streifenwellenleitern innerhalb des Trägers stattfinden, so werden entsprechend verspiegelte Gradienten-Index-Linsen 9 in einem bis zur Koppelstelle führenden Schlitz angeordnet. Diese Art von Koppelstellen kann auch vollständig innerhalb eines integriert-optischen Bauelementes liegen und dabei 0,5 pitch Gradienten-Index-Linsen (z.B. Linse 10) verwenden, durch die kreuzweise Streifenwellenleiter der einen Ebene in die andere Ebene abgebildet werden.

In dem vergrößerten Ausschnitt des integriert-optischen Bauelementes, dargestellt in Fig. 2, sind in einer Gradienten-Index-Linse 18 durch verschiedenartig gepunktete Linien die Strahlenverläufe angedeutet, auf denen Streifenwellenleiter verschiedener Ebenen gleichzeitig mit einer Linse verbunden sind.

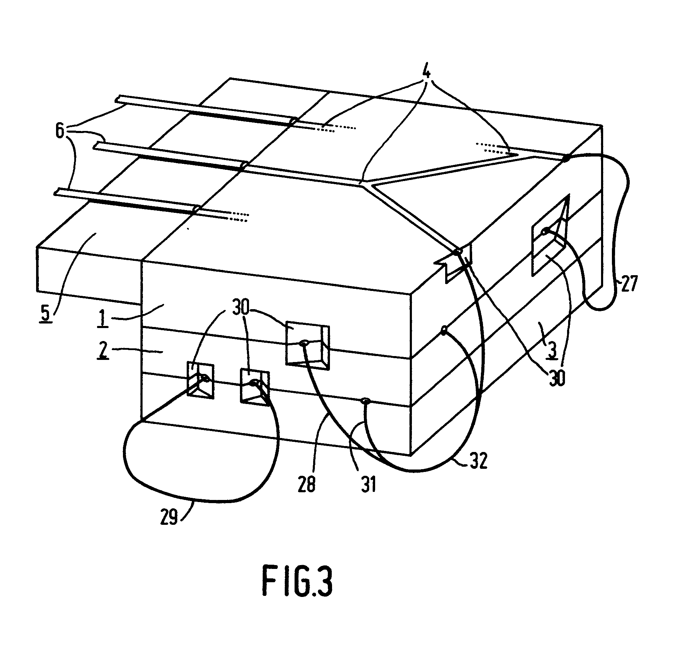

Der optische Multilayer nach Fig. 3 ist ein integriert-optisches Bauelement, das aus für sich gesehen integriert-optischen Bauelementen 1, 2 und 3 besteht, die bündig übereinander gelegt sind. Die optischen Bauelemente 1, 2 und 3 sind Substrate, auf deren Oberflächen Streifenwellenleiter 4 eingelassen sind. Die Form der Bahnen der Streifenwellenleiter 4 ergibt sich aus den von ihnen erwarteten optischen Funktionen.

Streifenwellenleiter 4 sind über Randverbinder 5 an Lichtwellenleiter 6 eines optischen Übertragungssystems anschließbar. Der Randverbinder kann auch Gradienten-Index-Stablinsen enthalten.

Das aus übereinander liegenden Substraten bestehende integriert-optische Bauelement hat zwischen den Streifenwellenleitern 4 der verschiedenen Ebenen optische Verbindungen, die durch einzelne Lichtwellenleiter 7, 8 erzeugt werden. Dazu werden in vorgegebenen Bereichen die Streifenwellenleiter 4 an den Rand geführt. Auf die herangeführten Enden der Streifenwellenleiter 4 werden Lichtwellenleiter 7, 8 geklebt. Zum Positionieren sind diese Lichtwellenleiter in Manipulatoren befestigt, mit denen sie auch während des Klebens fest verbunden bleiben. Nach dem Aushärten des Klebemittels werden die Manipulatoren entfernt.

Die Lichtwellenleiter 27, 28 werden in Randausschnitten 30 der Substrate unter dem Winkel befestigt, unter dem Streifenwellenleiter 4 an den Rand heranführen. Die Randausschnitte 30 lassen sich auch trichterförmig herstellen und durch ihre Form bei der Positionierung der Lichtwellenleiter 27, 28 oder 29 mit verwenden.

Mit den Lichtwellenleitern 29 werden auf den Substrat 31 die Streifenwellenleitern untereinander verbunden. In ihrem beweglichen Bereich sind die Lichtwellenleitern 28, 31 auch, wenn erforderlich, vereinigt und als Koppler 32 wirksam.

Philips Patentverwaltung GmbH      PHD 843338 EP
N.V. Philips' Gloeilampenfabrieken    04.12.1984


Patentansprüche

1. Integriert-optisches Bauelement mit mindestens einem Trägersubstrat für flächige Schichtwellenleiter oder Streifenwellenleiter, insbesondere für die optische Nachrichtentechnik, dadurch gekennzeichnet, daß die Schichtwellenleiter bzw. Streifenwellenleiter in mehreren Ebenen angeordnet sind, daß die Streifenwellenleiter bis zum Rand des Trägersubstrats heranführen und daß Streifenwellenleiter der einen Ebene und Streifenwellenleiter oder Schichtwellenleiter der anderen Ebene durch äußere optische Elemente verbunden sind.

2. Integriert-optische Bauelemente nach Anspruch 1, dadurch gekennzeichnet, daß in mindestens zwei Ebenen Bereiche vorgesehen sind, in denen die Streifenwellenleiter etwa parallel zueinander liegen und daß zwischen mindestens einem Streifenwellenleiter der einen Ebene und einem Streifenwellenleitter oder Schichtwellenleiter der anderen Ebene eine optische Abbildung vorgesehen ist.

3. Integriert-optisches Bauelement nach Anspruch 2, dadurch gekennzeichnet, daß die Abbildung durch eine Gradienten-Index-Stablinse ausgeführt wird, deren optische Achse parallel zu der Ebene der Schichtwellenleiter liegt.

4. Integriert-optisches Bauelement nach Anspruch 3, dadurch gekennzeichnet, daß die Gradienten-Index-Stablinsen einseitig verspiegelt ist und ihre Länge einem Viertel der übertragenen Strahlperiode entspricht.

5. Integriert-optisches Bauelement nach Anspruch 4, dadurch gekennzeichnet, daß die Verspiegelung eine wellenlängenabhängige Beschichtung ist, auf die eine weitere Gradienten-Index-Stablinse aufgesetzt ist.

6. Integriert-optisches Bauelement nach Anspruch 4, dadurch gekennzeichnet, daß die Verspiegelung eine wellenlängenunabhängige Teilverspiegelung ist.

7. Integriert-optisches Bauelement nach einem der vorhergehenden Ansprüche, dadurch gekennzeichnet, daß die Streifenwellenleiter verschiedener Ebenen gleichzeitig paarweise aufeinander abgebildet sind.

8. Integriert-optisches Bauelement nach Anspruch 7, dadurch gekennzeichnet, daß die äußeren optischen Elemente durch Lichtwellenleiter gebildet werden.

9. Integriert-optisches Bauelement nach Anspruch 8, dadurch gekennzeichnet, daß mindestens zwei Lichtwellenleiter zu einem optischen Koppler zusammengeführt sind.

10. Integriert-optisches Bauelement nach Anspruch 8, dadurch gekennzeichnet, daß die Streifenwellenleiter einer Ebene untereinander durch Lichtwellenleiter verbunden sind.

11. Integriert-optisches Bauelement nach einem der vorhergehenden Ansprüche, dadurch gekennzeichnet, daß die äußeren optischen Elemente in einem Ausschnitt der Trägersubstrate befestigt sind.

0146196

FIG.1

FIG.2

1-Ⅱ-PHD  83-338$^{C}$

0146196

FIG.3

2-Ⅱ- PHD  83-338$^C$